# EUROPÄISCHE PATENTANMELDUNG

(11) **EP 2 187 229 A1**
(43) Veröffentlichungstag der Anmeldung: **19.05.2010**
(21) Anmeldenummer: 09174468.0
(22) Anmeldetag: 29.10.2009
(51) Int. Cl.: G01S 1/00

(54) **Gerät zur Erkennung von GNSS-Störsendern**

(30) Priorität: 06.11.2008 DE 102008043506
(71) Anmelder: Robert Bosch GmbH, 70442 Stuttgart (DE)
(72) Erfinder: Rebsch, Johannes-Christof, 30161 Hannover (DE); Friese, Michael, 31171 Nordstemmen (DE); Fiedler, Marco, 31199 Diekholzen (DE); Holbruegge, Sven, 32756 Detmold (DE); May, Thomas, 38302 Wolfenbuettel (DE); Michler, Thorsten, 38126 Braunschweig (DE)

(57) **Zusammenfassung**

Die Erfindung betrifft ein Gerät (100) mit einem Empfänger (10) eines satellitenbasierten Ortungssystems. Um ein Gerät (100) zur Verfügung zu stellen, welches einen Störsender (20) ermitteln kann, sieht die Erfindung vor, dass das Gerät (100) eine Vorrichtung (11) aufweist, an der Störsignale (19) erkennbar sind.

## Beschreibung

### Stand der Technik

Die Erfindung betrifft ein Gerät mit einem Empfänger eines satellitenbasierten Ortungssystems.

Zudem betrifft die Erfindung ein Verfahren in einem mit einem Gerät versehenen satellitenbasierten Ortungssystem.

### Offenbarung der Erfindung

Für die weltweite Kommunikation haben Satellitenortungssysteme große Bedeutung erlangt. Hierzu zählt insbesondere das Global Positioning System (deutsch: globales Positionsbestimmungssystem) (GPS), d. h. jenes weltweite, satellitengestützte Navigationssystem, zu dem Satelliten, weltweite verteilte Monitorstationen zur Satellitenbeobachtung sowie eine große Anzahl von GPS-Empfängern gehören. Zur Standortbestimmung werden dabei Signallaufzeiten zwischen Satelliten und dem GPS-Empfänger auswertet. Ursprünglich zur Positionsbestimmung und Navigation im militärischen Bereich vorgesehen, gewinnt es mittlerweile auch zunehmend Bedeutung im zivilen Bereich. Hier sind wiederum eine Anzahl von Geräten in Gebrauch, die einen GPS-Empfänger enthalten, um eine Standortbestimmung und eine Entfernungsbestimmung vorzunehmen. Ein GPS-Empfänger befindet sich beispielsweise in einem als On-Board-Unit (OBU) vorliegenden Gerät der eingangs genannten Art, das der automatischen Abrechnung in einem Gebührenerhebungs- oder Mautsystem dient. Neben dem GPS-Empfänger weist die OBU zudem ein GSM-Modul sowie einen Speicher auf, in dem fahrzeugspezifische Angaben der mautpflichtigen Autobahnen enthalten sind. Aus den gespeicherten Daten sowie aus dem GPS-Signal errechnet die OBU die fällige Maut und speichert diese in einem an den Betreiber des Mautsytems versendungsfähigen Datenpaket.

GNSS-Empfänger können Angriffsziel von Störsendern sein, die einen einwandfreien Empfang einer Funknachricht im Rahmen eines globalen Positionsbestimmungssystems erschweren oder gar unmöglich machen. Dabei sendet der Störsender elektromagnetische Wellen aus, die die ursprünglichen Wellen zum Teil oder gänzlich überlagern. Die störenden Signale liegen dabei auf dem entsprechenden Frequenzband mit hoher Signalstärke vor, die keinen korrekten Datenstrom enthalten oder die echten GNSS-Signale imitieren und einen gefälschten Datenstrom enthalten. Der GNSS-Empfänger empfängt dabei statt der vergleichsweise schwachen Satellitensignale nur vergleichsweise starke Signale des Störsenders und ist nicht in der Lage, die Satellitensignale aus den Störungen herauszufiltern. Derzeit bekannte Arten von Störsendern sind GNSS-Jammer und GNSS-Spoofer.

Aus dem Stand der Technik sind mittlerweile Instrumentarien bekannt, um die Wirkung von GNSS-Jammern zu minimieren. Hierzu zählen etwa GNSS-Antennen mit ausgeprägter Richtcharakteristik, indem diese Antennen die Störsignale von GNSS-Jammern nicht aufkommen lassen, vielmehr wird das Satellitensignal von der Antenne bevorzugt von oben empfangen.

Derartige richtungsempfindliche Empfangsantennen dienen auch der Abwehr der oben erwähnten und durch GNSS-Spoofing erzeugten Imitationen von echten GNSS-Signalen. Unter GNSS-Spoofing versteht man gemeinhin das Aussenden von Störsignalen, welche das GNSS-Signal imitieren. Dabei werden im Gegensatz zum GNSS-Jammer formal gültige und falsche Positionsdaten erzeugt und übertragen.

Ungelöst ist jedoch bisher das Problem, dass ein Gerät, insbesondere eine OBU zur Mauterhebung, bei gestörtem GNSS-Empfang bisher nicht ermitteln kann, ob der Grund für einen schlechten GNSS-Empfang ein GNSS störender Sender ist. Bisherige aus dem Stand der Technik bekannte Instrumentarien, wie richtungsempfindliche Empfangsantennen, vermögen Störsignale lediglich von vornherein zu unterdrücken, nicht jedoch nachzuweisen.

Es ist daher Aufgabe der Erfindung, ein Gerät der eingangs genannten Art zur Verfügung zu stellen, welches einen Störsender erkennen kann.

Diese Aufgabe wird mit den Merkmalen des Anspruchs 1 gelöst.

Vorteilhafte Ausgestaltungen der Erfindung manifestieren sich in den abhängigen Ansprüchen.

Erfindungsgemäß ist ein Gerät vorgesehen, das eine Vorrichtung aufweist, an der Störsignale erkennbar sind. Die Vorrichtung ist also integraler Bestandteil des Geräts. Sie kann als eigenständige Komponente in dem Gerät neben dem eigentlichen GNSS-Empfänger, dem GSM-Modul und dem Speicher vorliegen.

Der Erfindung liegt die Erkenntnis zugrunde, dass es zur Ermittlung von Störsignalen vorteilhaft ist, ein Gerät wie eine OBU mit einer zusätzlichen Vorrichtung zu versehen, an der Störsignale erkennbar sind. Eine Erkennung kann derart erfolgen, dass beispielsweise ein GNSS-Empfänger die über eine_GNSS-Antenne empfangenen Signale auswertet. Die Auswertung kann dabei durch Signalempfang und Datendekodierung erfolgen. Da die Störsignale das Satellitensystem nachbilden können, können im Rahmen der Auswertung die Signale wie herkömmliche Satellitensignale ausgewertet werden. Die Erkennung von Datenfälschung ist in diesem Fall über Plausibilitätsprüfungen mit der bekannten Satellitenkonstellation möglich.

Eine vorteilhafte Ausgestaltung der Erfindung sieht daher vor, dass die Vorrichtung den Empfänger enthält, der mit einer Antenne eines satellitenbasierten Ortungssystems gekoppelt ist.

Als Kriterium für einen Störsender kann weiterhin gelten, dass die empfangene Feldstärke im relevanten Frequenzband über einem Schwellenwert liegt und gleichzeitig das Signal der Satelliten nicht ausgewertet werden kann.

Im Rahmen der Erfindung bewegen sich die empfangenen Feldstärken des Störsenders einem definierten und konfigurierbaren Schwellwert. Die Ursache, dass das Signal der GNSS-Satelliten nicht gleichzeitig ausgewertet werden kann, liegt darin, dass bei einer Störung die Satellitensignale im Verhältnis zum Störsignal derart schwach sind, dass sie nicht aus den Störsignalen herausgefiltert werden können. Bei Störung durch Vortäuschung eines echten Satelliten, werden die Signale in herkömmlicher Weise ausgewertet. Die Erkennung der Täuschung folgt dabei über Plausibilitätsprüfungen.

Eine praktikable Variante der Erfindung sieht vor, dass die Vorrichtung in Gestalt eines Detektors vorliegt. Im Rahmen der Erfindung ist also auch vorgesehen, dass Störsignale, d. h. nicht originäre GNSS-Signale über einen hierfür eigens vorgesehenen Detektor erfasst werden.

Um eine Kopplung zwischen Empfänger und Detektor herzustellen, ist es zweckmäßig, dass zwischen Empfänger und Detektor eine Datenverbindung ausgebildet ist. Diese Datenverbindung kann in Gestalt einer Software- oder physikalischen Schnittstelle vorliegen.

Es ist von Vorteil, dass die Vorrichtung mindestens eine Auswertekomponente für die Lokalisierbarkeit des Störsenders aufweist. Hierdurch ist gewährleistet, dass an der Vorrichtung auch Störsignale lokalisierbar sind.

Die Auswertekomponente kann in Gestalt eines Detektors derart vorliegen, dass die Position des Störsenders aufgrund des Verlaufs der empfangenen Feldstärke geschätzt werden kann, wobei der Zusammenhang zwischen der Position des Störsenders und dem Verlauf der empfangenen Feldstärke an dem Detektor dergestalt ist, dass die Stärke des Störsignals in Abhängigkeit von der Position der Auswertekomponente variiert. Je weiter sich nämlich die Auswertekomponente von dem Störsender entfernt, desto schwächer wird dessen Störsignal empfangen. Nähert man sich dagegen mit der Auswertekomponente dem Störsender, so nimmt die empfangene Signalstärke des Störsenders zu.

Zudem sieht die Erfindung ein Verfahren in einem mit einem Gerät versehenen satellitenbasierten Ortungssystem vor, bei dem die Störsender von einer Vorrichtung des Geräts erkannt und lokalisiert werden. Bei dem Gerät kann es sich um ein Gerät gemäß den Ansprüchen 1 bis 7 handeln. Vorzugsweise werden dabei die Störsender von der Vorrichtung in Gestalt eines Detektors erkannt. Auch können im Rahmen der Erfindung die Störsender von der Vorrichtung in Gestalt des Empfängers und einer mit dem Empfänger gekoppelten Antenne erkannt werden.

Als Kriterium für die Existenz eines Störsenders kann die Erkenntnis dienen, dass eine von der Vorrichtung empfangene Feldstärke in einem relevanten Frequenzband über einem Schwellwert liegt und gleichzeitig das Signal eines Satelliten, beispielsweise eines GNSS-Satelliten, nicht ausgewertet werden kann. Es ist daher von Vorteil, dass das Verfahren noch weitere Schritte aufweist, und zwar zunächst die Prüfung, ob eine von dem Empfänger oder dem Detektor empfangene Feldstärke eines Signals über einem Feldstärkeschwellenwert liegt, um dann in einem weiteren Schritt zu prüfen, ob gleichzeitig das Signal eines Satelliten eines Ortungssystems auswertbar ist.

Eine weitere Erkenntnis der Erfindung ist die Art der Auswertung, um ein von der Vorrichtung empfangenes Störsignal nachweisen zu können. Hierzu wird in einem ersten Schritt geprüft, ob von der Vorrichtung mindestens drei Satellitensignale in guter Qualität empfangen werden. Ist dieses der Fall, liegt keine Störung vor. Ein weiterer Prüfungsschritt manifestiert sich darin, ob sich eine Position des Empfängers berechnen lässt. Ist dieses der Fall, so liegt keine Störung vor. Lässt sich zudem nach längerer Zeit und trotz Empfangs starker Signale keine Position, beispielsweise im Rahmen des globalen Positionsbestimmungssystems berechnen, so kann man die Schlussfolgerung ziehen, dass es sich um Störsignale handelt.

Die Auswertung von komplexen Störungen kann sich im Rahmen des erfindungsgemäßen Verfahrens derart gestalten, dass zunächst eine Position berechnet wird, und in diesem Zusammenhang geprüft wird, inwieweit bei bekannter Satellitenkonstellation und aktuell berechneter Position die in die Berechnung einbezogenen Satelliten tatsächlich sichtbar sind. Um zu prüfen, ob ein Störsender in einem mit dem Gerät versehenen Fahrzeug mitgeführt wird, sieht eine praktikable Variante der Erfindung vor, dass Störsignale über einen längeren Zeitraum von der Vorrichtung empfangen werden, was ein Indiz für Störsender in dem Fahrzeug darstellen würde.

Die Erfindung wird im Folgenden auf der Grundlage von Ausführungsbeispielen anhand der Zeichnungen näher erläutert. Es zeigen in schematischen Darstellungen:
- Fig. 1: eine Gerät gemäß der Erfindung;
- Fig. 2: eine weitere Ausführungsform des Gerätes gemäß der Erfindung.

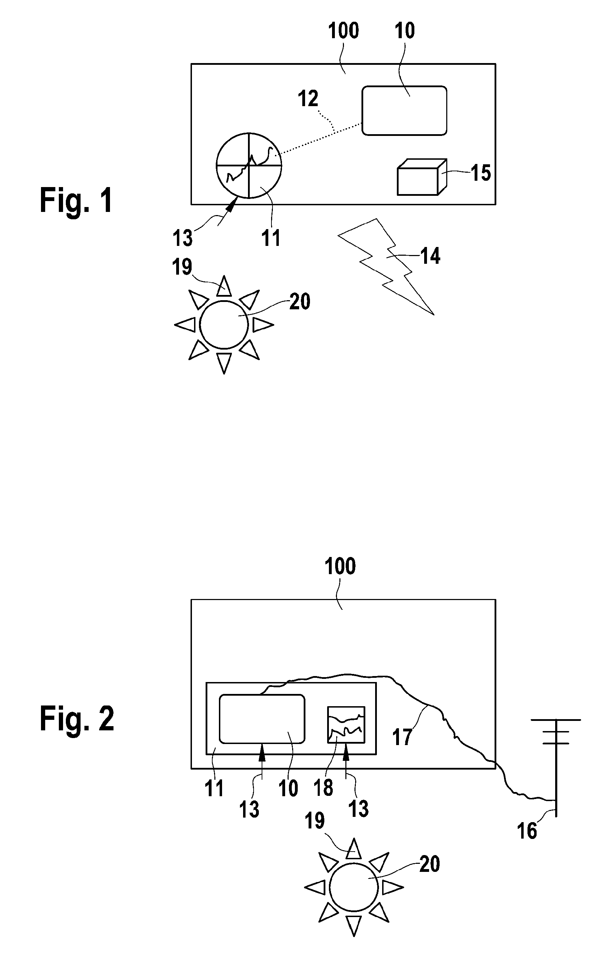

Fig. 1 zeigt ein erfindungsgemäßes Gerät, das mit dem Bezugszeichen 100 versehen ist und in Gestalt einer On-Board-Unit (OBU) vorliegt. Bei einer On-Board-Unit (OBU) handelt es sich um ein Gerät, das in Fahrzeugen eingebaut wird, um die automatische Abrechnung in einem Mautsystem zu ermöglichen.

Das in Gestalt einer OBU vorliegende Gerät 100 weist aus dem Stand der Technik bekannte Komponenten, wie einen GPS-Empfänger 10 und ein in Fig. 1 nicht gezeigtes GSM-Modul sowie einen Speicher auf, in dem fahrzeugspezifische Angaben sowie Positionsdaten enthalten sind. Wie aus Fig. 1 hervorgeht, ist das Gerät 100 um eine Vorrichtung 11 in Gestalt eines Detektors erweitert, der GPS-Störsignale von GPS-Störsendern erkennt. Zwischen GPS-Empfänger 10 und Vorrichtung 11 ist eine Datenverbindung 12 ausgebildet, die in Gestalt einer Software oder physikalischen Schnittstelle vorliegt. Dadurch ist gewährleistet, dass der GPS-Empfänger 10 in die Lage versetzt wird, die über die Vorrichtung 11 empfangenen Störsignale 19 eines Störsenders 20 auszuwerten.

Als Kriterium für einen Störsender 20 kann eine an der Vorrichtung 11 empfangene Feldstärke 13 des Störsignals 19 gelten, die in einem relevanten Frequenzband über einem Schwellwert liegt, wobei gleichzeitig das an dem Empfänger 10 empfangene Signal der GPS-Satelliten nicht auswertbar ist.

Wie aus Fig. 1 weiter hervorgeht, verfügt das Gerät 100 über eine Funkverbindung 14, die die Information, dass ein an der Vorrichtung 11 empfangenes Störsignal 19 des Störsenders 20 eine zusammen mit den fahrzeugspezifischen Angaben ermittelte Position verändert, an den Mautbetreiber sendet. Auch steht für die dauerhafte Speicherung dieser Information in dem Gerät 100 ein Speichermedium 15, beispielsweise in Gestalt eines Flashspeichers zur Verfügung. Alternativ kann die Information auch mit Hilfe des in Fig. 1 nicht gezeigten GSM-Moduls an den Mautbetreiber gesendet werden.

Zudem kann die letzte gültige Position des Gerätes 100, die aus den in einem Speicher des Gerätes 100 gespeicherten fahrzeugspezifischen Angaben sowie aus dem an dem Empfänger 10 empfangenen Signal errechnet wird, vor dem Empfang des Störsignals 19 in dem Speichermedium 15 gespeichert und an den Mautbetreiber über die Funkverbindung 14 übertragen werden, um das Störsignal 19 für den Mautbetreiber offenbar zu machen.

Fig. 2 zeigt eine alternative Ausgestaltung des Gerätes 100. Die Vorrichtung 11 enthält den Empfänger 10, der mit der Antenne 16 gekoppelt ist. Zwischen dem Empfänger 10 und der Antenne 16 ist eine herkömmliche Kabelverbindung 17 ausgebildet. Der Empfänger 10 ist auch hier in der Lage, durch Auswerten der über die Antenne 16 empfangenen Störsignale 19 den Störsender 20 zu erkennen. Die Vorrichtung 11 kann zudem eine Auswertekomponente 18 für die Lokalisierbarkeit des Störsenders 20 aufweisen.

Die Auswertekomponente 18 kann in Gestalt eines zusätzlichen Detektors vorliegen, und zwar derart, dass die Position des Störsenders 20 aufgrund des Verlaufs der empfangenen Feldstärke 13 geschätzt werden kann. Hierzu ist zu beachten, dass die Position des Störsenders 20 und der Verlauf der empfangenen Feldstärke 13 an dem Detektor die Stärke des Störsignals in Abhängigkeit von der Position der Auswertekomponente 18 angibt. Je weiter sich nämlich die Auswertekomponente 18 von dem Störsender 20 entfernt, desto schwächer wird dessen Störsignal 19. Nähert man sich dagegen mit der Auswertekomponente 18 dem Störsender 20, so nimmt die Signalstärke 19 des Störsenders 20 zu.

Die vorliegende Erfindung beschränkt sich in ihrer Ausführung nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch machen. So ist das erfindungsgemäße Gerät 100 auch in anderen satellitenbasierten Ortungssystemen, wie z. B. Galileo oder Glonass anwendbar. Auch ist eine Vielzahl von Auswertungsmethoden denkbar, um ein von dem Detektor empfangenes Störsignal nachweisen zu können. Beispielsweise kann bei einer komplexen Störung zunächst die Position berechnet werden.

## Patentansprüche

1. Gerät (100) mit einem Empfänger (10) eines satellitenbasierten Ortungssystems, **dadurch gekennzeichnet, dass** das Gerät (100) eine Vorrichtung (11) aufweist, an der Störsignale (19) eines Störsenders (20) erkennbar sind.

2. Gerät nach Anspruch 1, **dadurch gekennzeichnet, dass** die Vorrichtung (11) den Empfänger (10) enthält, der mit einer Antenne (16) eines satellitenbasierten Ortungssystems gekoppelt ist.

3. Gerät nach Anspruch 1, **dadurch gekennzeichnet, dass** die Vorrichtung (11) in Gestalt eines Detektors vorliegt.

4. Gerät nach Anspruch 3, **dadurch gekennzeichnet, dass** zwischen Empfänger (10) und Detektor eine Datenverbindung (13) ausgebildet ist.

5. Gerät nach einem der Ansprüche 1 bis 4, **dadurch gekennzeichnet, dass** das Gerät (100) eine On-Board-Unit ist.

6. Gerät nach einem der vorhergehenden Ansprüche, **dadurch gekennzeichnet, dass** die Vorrichtung (11) mindestens eine Auswertekomponente (18) für die Position des Störsenders (20) aufweist.

7. Verfahren in einem mit einem Gerät versehenen satellitenbasierten Ortungssystem, **dadurch gekennzeichnet, dass** Störsignale (19) eines Störsenders (20) von einer Vorrichtung (11) des Gerätes (100) erkannt werden.

8. Verfahren nach Anspruch 7, **dadurch gekennzeichnet, dass** die Störsender (20) von der Vorrichtung (11) in Gestalt eines Detektors erkannt werden.

9. Verfahren nach Anspruch 7, **dadurch gekennzeichnet, dass** die Störsender (20) von der Vorrichtung (11) in Gestalt des Empfängers (10) und einer mit dem Empfänger (10) gekoppelten Antenne (16) erkannt werden.

10. Verfahren nach einem der Ansprüche 7 bis 9 mit folgenden Schritten
a. Prüfung, ob eine von der Vorrichtung (11) empfangene Feldstärke eines Signals (19) über einen Feldstärkeschwellenwert liegt,
b. Prüfung, ob gleichzeitig das Signal eines Satelliten eines Ortungssystems auswertbar ist.

11. Verfahren nach einem der Ansprüche 9 oder 10, mit folgenden Schritten:
a. Prüfung, ob von der Antenne (16) mindestens drei Signale (19) empfangen werden,
b. Prüfung, ob sich eine Position des Empfängers (10) berechnen lässt.

12. Verfahren nach einem der Ansprüche 7 bis 11, **dadurch gekennzeichnet, dass** der Störsender (20) von einer Auswertekomponente (18) lokalisiert werden kann.

13. Verfahren nach einem der Ansprüche 7 bis 12, **dadurch gekennzeichnet, dass** Störsignale (19) über einen längeren Zeitraum von der Vorrichtung (11) empfangen werden.
